(19) Europäisches Patentamt
European Patent Office
Office européen des brevets

(11) **EP 3 084 866 B1**

(12) **FASCICULE DE BREVET EUROPEEN**

(45) Date de publication et mention
de la délivrance du brevet:
**07.11.2018 Bulletin 2018/45**

(21) Numéro de dépôt: **14828226.2**

(22) Date de dépôt: **17.12.2014**

(51) Int Cl.:
*H01M 4/66* (2006.01)    *H01M 4/70* (2006.01)
*H01M 12/08* (2006.01)    *C25D 3/42* (2006.01)
*C25D 7/00* (2006.01)    *H01M 4/04* (2006.01)
*H01M 4/134* (2010.01)    *H01M 4/1395* (2010.01)
*H01M 4/38* (2006.01)    *H01M 4/58* (2010.01)
*H01M 4/76* (2006.01)    *H01M 10/052* (2010.01)
*H01M 10/0525* (2010.01)    *H01M 10/054* (2010.01)
*H01M 10/0562* (2010.01)    *H01M 4/02* (2006.01)

(86) Numéro de dépôt international:
**PCT/FR2014/053380**

(87) Numéro de publication internationale:
**WO 2015/092267 (25.06.2015 Gazette 2015/25)**

(54) **COMPARTIMENT ANODIQUE AVEC COLLECTEUR EN ALLIAGE AMORPHE**

ANODENKAMMER MIT EINEM KOLLEKTOR AUS EINER AMORPHEN LEGIERUNG

ANODE COMPARTMENT HAVING AN AMORPHOUS-ALLOY COLLECTOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2013 FR 1362919**

(43) Date de publication de la demande:
**26.10.2016 Bulletin 2016/43**

(73) Titulaires:
• **Electricité de France
75008 Paris (FR)**
• **Centre National de la Recherche Scientifique
(C.N.R.S.)
75016 Paris (FR)**

(72) Inventeurs:
• **STEVENS, Philippe
F-77940 Noisy Rudignon (FR)**
• **TOUSSAINT, Gwenaëlle
F-77140 Nemours (FR)**
• **PUECH, Laurent
F-31540 Montégut-Lauragais (FR)**
• **VINATIER, Philippe
F-33800 Bordeaux (FR)**

(74) Mandataire: **Cabinet Plasseraud
66, rue de la Chaussée d'Antin
75440 Paris Cedex 09 (FR)**

(56) Documents cités:
**EP-A1- 1 088 796        FR-A1- 2 950 737
JP-A- 2000 294 291      JP-A- 2001 250 559
JP-A- 2005 209 434      US-A1- 2013 185 930**

**Description**

Domaine de l'invention

La présente invention concerne le domaine technique des batteries lithium et sodium rechargeables et plus particulièrement un compartiment anodique pour de telles batteries ainsi que les procédés pour leur fabrication.

État de la technique

La densité d'énergie massique relativement faible est aujourd'hui la principale limitation pour l'utilisation de batteries lithium ou sodium rechargeables dans les équipements portables tels que l'électronique portable ou les véhicules électriques. Cela est en grande partie lié aux performances des matériaux qui composent les batteries. Actuellement, les matériaux pour électrodes négatives disponibles présentent une capacité spécifique comprise entre 300 et 350 Ah/kg. Plus la capacité spécifique d'un matériau est élevée, plus la densité d'énergie massique peut être augmentée.

Le lithium métal ayant une capacité spécifique théorique supérieure à 3800 Ah/kg, son utilisation en tant que matériau pour électrodes négatives semble prometteuse.

Malheureusement, ce matériau utilisé comme matière active dans une électrode négative a la fâcheuse tendance de croître sous forme de dendrites pendant les phases de charge. En croissant, ces dendrites traversent l'électrolyte liquide et peuvent par conséquent provoquer un court-circuit en reliant électriquement l'électrode positive à l'électrode négative.

Afin d'éviter la croissance du lithium métal sous forme de dendrites lors des phases de charge, les batteries lithium-ion utilisent un matériau d'électrode négative dans lequel l'ion lithium peut s'insérer pendant la phase de charge et duquel il peut se libérer pendant la phase de décharge. Le graphite en est un exemple. Une illustration de l'utilisation du graphite comme matériau d'électrode négative est donnée par le document US5053297.

Néanmoins, le graphite a l'inconvénient de présenter une capacité spécifique très inférieure (théoriquement 376 Ah/kg pour $LiC_6$ par exemple) à celle du lithium métal.

Alternativement, le lithium métal peut être utilisé en association avec un électrolyte polymère composé d'une matrice neutre tel que le poly(oxyde d'éthylène) (aussi désigné PEO) dans laquelle un sel de lithium tel que le *bis*(trifluorométhanesulfonyle)imide de lithium (aussi désigné LiTFSI) est dissout. Tel est le cas dans les batteries lithium-métal-polymère (batteries LMP). Afin de limiter le risque de croissance du lithium métal sous forme de dendrites, l'épaisseur du lithium métal est limitée, généralement entre 30 et 100 $\mu$m, dans les électrodes négatives des batteries LMP. Ainsi, le lithium métal est laminé sous forme de ruban sur une feuille d'électrolyte polymère pour obtenir un compartiment anodique dont la densité de charge utile par unité de surface est relativement faible, typiquement entre 1 et 10 mAh/cm².

Par ailleurs, dans un tel électrolyte polymère, la conductivité ionique de l'électrolyte est obtenue par l'ajout du sel de LiTFSI. La mobilité de ce sel, en particulier l'anion, dans la matrice neutre génère un gradient de concentration de sel lors du passage d'un courant ionique, en effet, le nombre de transport (c'est-à-dire la fraction du courant transportée par l'ion) pour le cation est inférieur à 1. Ce gradient de concentration est d'autant plus élevé que la densité de courant sera forte. Or, la formation de lithium métal sous forme de dendrites est favorisée par les forts gradients en concentration.

Une dernière solution pour éviter la croissance de lithium métal sous forme de dendrite qui sera décrite ici est l'utilisation d'un électrolyte solide très dur. La dureté élevée de ces électrolytes solides a l'avantage d'empêcher les dendrites formées de traverser l'électrolyte solide et de générer un court-circuit. Dans l'article « *Lithium métal stability in batteries with block copolymer electrolytes* » (en français : « La stabilité du lithium metal dans les batteries avec électrolytes en copolymer en blocs »), D. Hallinan et al. ont calculé qu'un électrolyte polymère d'une dureté d'environ 6 GPa est nécessaire pour éviter la formation de dendrites (Journal of the Electrochemical Society, 160 (3) A464-A470 (2013).

Des matériaux céramiques tels que le Lisicon (« Li super ionic conductor », en français conducteur superionique de lithium) ou Nasicon (« Na super ionique Conductor », en français conducteur superionique de sodium), qui peuvent être utilisés en tant qu'électrolytes solides, présentent une dureté d'environs 6 GPa. En outre, ces matériaux céramiques ne dépendent d'aucun sel dissout dans leur matrice pour présenter des propriétés de conduction d'ions puisque qu'ils sont intrinsèquement conducteurs d'ions : la conduction ionique est obtenue uniquement par transport de cation à travers la structure cristalline de ces matériaux céramiques et la conduction d'électrons est négligeable. Par conséquent, leur nombre de transport est est égale à 1, ce qui défavorise d'autant plus la croissance de lithium métal sous forme de dendrites.

L'utilisation d'un électrolyte céramique ouvre donc la voie à l'utilisation d'une électrode négative à beaucoup plus forte épaisseur car le problème de la formation de dendrites ne se pose pas. Ainsi, une électrode négative à capacité surfacique beaucoup plus élevée peut être obtenue. La combinaison d'une électrode négative à très forte capacité surfacique avec une électrode positive à forte capacité tel qu'une électrode à air (utilisant l'oxygène de l'air) ou une électrode de souffre peut donc conduire à l'obtention d'une batterie à très haute densité d'énergie massique et volumique. Dans une telle batterie, du métal, par exemple de l'acier, est déposé sur l'électrolyte céramique, par exemple par pulvérisation cathodique, en une couche mince pour former un collecteur de courant. Par la suite, le lithium métal est crû entre le collecteur et l'électrolyte céramique.

Dans une telle batterie à très haute densité d'énergie massique et volumique, la réduction des cations lors de la phase de charge se produit à l'interface entre l'électrolyte céramique et la matière active qu'est le lithium métal. Ainsi, la croissance du lithium métal se fait à partir de cette interface suivant une unique dimension.

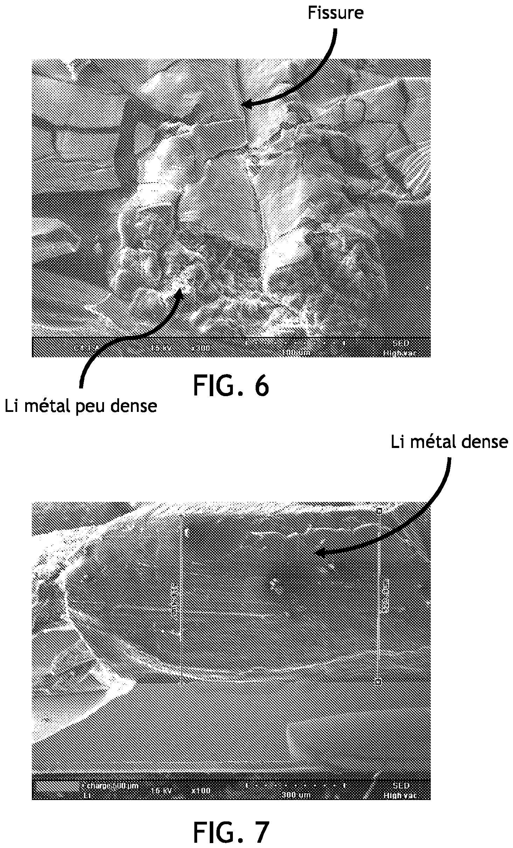

Néanmoins, le lithium métal peut croître sous la forme d'une couche dense et uniforme (voir figure 7) ou sous la forme d'un dépôt filandreux ou poreux (voir figure 6). Les inventeurs ont observé qu'une électrode négative en lithium métal sous forme filandreuse ou poreuse présentait une résistance qui augmente rapidement avec le nombre de cycles de charge et de décharge en comparaison à une électrode négative en lithium métal sous forme dense et uniforme.

Ils attribuent cette augmentation à une diminution de la surface active de l'électrode négative qui est déterminée par l'interface entre le lithium métal et l'électrolyte solide. La diminution de cette surface entraine celle de la capacité de l'électrode négative et l'augmentation de la résistance de celle-ci. Lorsque la couche de lithium créée lors de la phase de charge est dense et uniforme, il n'y a pas d'augmentation de la résistance de l'électrode négative et celle-ci peut être utilisée pendant un nombre de cycles de charge et de décharge plus élevé.

En outre, les inventeurs ont observé que la croissance de lithium sous forme filandreuse ou poreuse (forme peu dense) réduisait la capacité de l'électrode négative en rendant une partie du lithium métal inaccessible lors de la phase de décharge : cette partie de lithium métal n'est pas oxydée. Par exemple, les inventeurs ont analysé une électrode négative totalement déchargée et ont observé que 30% du lithium métal formé lors de la phase de charge n'était pas accessible lors de la phase de décharge et était présents sous forme filandreuse ou poreuse. Ceci est dû au fait que le lithium métal n'est plus en contact efficace avec l'électrolyte solide et ne peut donc pas s'oxyder en cation Li+ lors de la phase de décharge au niveau de l'interface. Sur cette même électrode négative, toutes les parties qui étaient présentes sous forme dense et uniforme avec une bonne interface avec l'électrolyte solide ont été accessibles lors de la phase de décharge et ont pu être totalement consommées.

En recherchant une solution à ce problème, les inventeurs ont découvert que l'utilisation d'un métal amorphe pour former le collecteur de courant évite la formation de lithium peu dense et seul le lithium dense est produit. La présente invention est fondée sur cette découverte.

JP2001/250559 et JP2005/209434 divulguent une batterie au lithium rechargeable avec un électrolyte solide comprenant une anode avec un collecteur en alliage amorphe.

Présentation de l'invention

Par conséquent, la présente invention propose une solution pour remédier aux problèmes rencontrés dans l'art antérieur décrit ci-dessus.

Pour cela, la présente invention propose un compartiment anodique pour batteries lithium ou sodium rechargeables comprenant :

- un électrolyte solide ;
- un collecteur déposé sur l'électrolyte solide ; et
- une matière active en lithium métal ou en sodium métal que l'on a fait croître entre l'électrolyte solide et le collecteur afin de former avec le collecteur une électrode en lithium métal ou en sodium métal,

dans lequel le collecteur est en un alliage amorphe avec un coefficient d'allongement relatif maximal supérieur à 1,8%.

Dans un tel compartiment anodique, la matière active en lithium métal ou en sodium métal croît sous forme dense. Ainsi, l'électrode négative formée par le collecteur et par la matière active présente une capacité spécifique élevée entre 10 et 500 mAh/cm$^2$.

D'autres caractéristiques optionnelles et non limitatives sont les suivantes. L'alliage amorphe contient avantageusement moins de 10% en nombre d'atomes de Si, Sn ou Ag au total. L'alliage amorphe est préférentiellement $Cu_xZr_{1-x}$, avec x compris entre 0,25 et 0,75.

Le collecteur peut se présenter sous la forme d'une fine couche d'épaisseur inférieure à 1 $\mu$m.

L'électrolyte solide est avantageusement en un matériau céramique.

La présente invention propose également un procédé pour la fabrication d'un compartiment anodique pour batteries lithium rechargeables comprenant :

- un électrolyte solide ;
- un collecteur en alliage amorphe ; et
- une matière active en lithium métal ou en sodium métal entre l'électrolyte solide et le collecteur ;

le procédé comprenant les étapes de :

- dépôt d'un alliage amorphe sur l'électrolyte solide pour former le collecteur ;
- croissance d'une matière active en lithium métal ou en sodium métal entre l'électrolyte solide et le collecteur obtenant ainsi le compartiment anodique.

L'alliage amorphe peut être déposé sur l'électrolyte solide par pulvérisation cathodique ou pulvérisation par faisceau d'ions.

L'alliage amorphe est préférentiellement $Cu_xZr_{1-x}$, avec x compris entre 0,25 et 0,75.

La matière active est avantageusement crûe entre l'électrolyte solide et le collecteur par dépôt électrochimique.

L'électrolyte solide est avantageusement en un matériau céramique.

L'invention propose encore une batterie comprenant un compartiment anodique tel que décrit ci-dessus et une cathode.

Dessins

D'autres objectifs, caractéristiques et avantages apparaitront à la lecture de la description illustrative qui suit, en référence aux dessins donnés à titre d'exemple et non limitatifs, parmi lesquels :

- la figure 1 est une illustration schématique d'un compartiment anodique selon l'invention sans revêtement ;
- la figure 2 est une illustration schématique d'un compartiment anodique selon l'invention avec revêtement ;
- la figure 3 est une illustration schématique d'un compartiment anodique selon l'invention sans revêtement et comprenant un boitier ;
- la figure 4 est une illustration schématique d'un compartiment anodique selon l'invention avec revêtement et comprenant un boitier ;
- la figure 5 est un diagramme illustrant de manière schématique les différentes étapes du procédé de fabrication d'un compartiment anodique selon l'invention, les étapes facultatives étant indiquées en pointillés ;
- la figure 6 est une photographie montrant l'état de la surface d'un collecteur en acier après une phase de charge ; et
- la figure 7 est une photographie montrant l'aspect d'une matière active en lithium métal dense.

Description

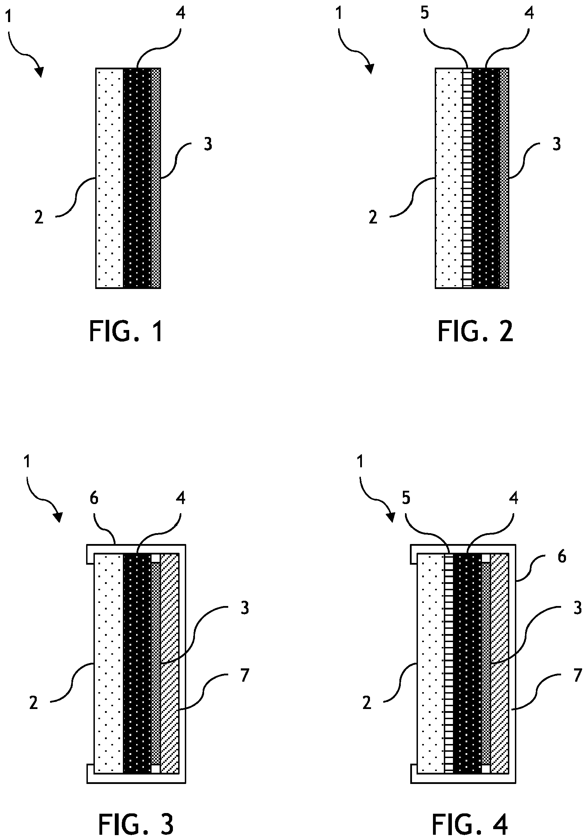

En référence aux figures 1 à 4, un compartiment anodique pour batteries lithium ou sodium rechargeables selon l'invention sera décrit ci-après.

Ce compartiment anodique **1** comprend un électrolyte solide **2,** un collecteur **3** sur l'électrolyte solide **2**, et une matière active **4** en lithium métal ou en sodium métal entre l'électrolyte solide **2** et le collecteur **3**. La matière active **4** résulte de la croissance de lithium métal ou de sodium métal entre ces deux éléments et forme avec le collecteur **3** une électrode en lithium métal ou en sodium métal.

Le compartiment anodique **1** tient son originalité en ce que le collecteur **3** est en un alliage amorphe. En effet, comme déjà indiqué ci-dessus, les inventeurs ont découvert qu'un tel collecteur permettait la croissance de matière active sous forme peu dense.

Par la suite, les inventeurs ont voulu identifier la cause de cette croissance sous forme peu dense de la matière active dans les collecteurs de l'art antérieur. C'est ainsi que les inventeurs ont observé que cette croissance du lithium métal sous forme peu dense a lieu particulièrement là où le collecteur, généralement en acier, déposé sur l'électrolyte solide, et sous lequel le lithium métal croît, présente des fissures (voir figure 6).

Les inventeurs supposent que cette croissance sous forme peu dense est due au fait que dans ces zones de fissures, le lithium métal n'est pas contraint et a donc tendance à se former de manière plus anarchique.

Pour expliquer l'apparition des fissures, les inventeurs proposent l'hypothèse selon laquelle lors de la croissance du lithium métal entre le collecteur et l'électrolyte solide une tension se crée à la surface du collecteur orientée colinéairement à celui-ci et conduisant à sa rupture.

Un alliage amorphe, par opposition à un alliage cristallin, présente un arrangement d'atomes le constituant irrégulier à moyenne et grande distance. Le collecteur **3** en alliage amorphe de l'invention ne se fissure pas pendant la phase de charge d'une batterie comprenant le compartiment anodique, ce qui permet d'éviter la croissance de la matière active sous forme peu dense (filandreuse ou poreuse). Il est capable de se déformer de manière réversible (déformation élastique) pour des contraintes importantes en comprimant la matière active. En effet, le coefficient d'allongement relatif maximal ($\varepsilon_Y$) d'un alliage amorphe, égale à la contrainte ($\sigma_Y$) divisée par le module d'Young (E), est plus élevé que celui d'un un métal ou alliage cristallin.

L'alliage amorphe choisi a avantageusement un coefficient d'allongement relatif maximal ($\varepsilon_Y$) supérieur à 1,8%.

L'alliage amorphe est composé de préférence de métaux ne formant pas d'alliage avec le lithium métal lors d'un dépôt électrochimique de lithium métal à partir du collecteur **3** en un tel alliage. Ainsi, l'alliage amorphe contient de préférence au total moins de 10 % en nomtre d'atomes de silicium, d'étain et d'argent.

Avantageusement, l'alliage amorphe est du $Cu_xZr_{1-x}$, avec x compris entre 0,25 et 0,75, de préférence, x est égale à environ 0,4.

Le collecteur **3** se présente sous la forme d'une fine couche, de préférence d'épaisseur inférieure à 1 $\mu$m. Ainsi le collecteur **3** est flexible.

Le collecteur **3** est relié électriquement à un conducteur électronique souple formé par une grille ou une feuille métallique souple, de préférence une grille souple en acier. Cette grille métallique souple recouvre au moins une partie, de préférence la totalité, de la surface du collecteur de courant. Afin d'améliorer le contact électrique entre le collecteur de courant et le conducteur électronique, une laque d'argent est de préférence appliquée au niveau de leur zone de contact. Le conducteur électronique permet de connecter électriquement le collecteur **3** à un élément extérieur au compartiment anodique.

L'électrolyte solide **2** est en un matériau céramique conducteur de cations alcalins, par exemple le lithium ou le sodium, de préférence le lithium.

De tels matériaux céramiques conducteurs de lithium sont connus, par exemple le LIC-GC (pour *Lithium Ion Conducting Glass Ceramic* de la société Ohara Inc. Japon). Il s'agit par exemple de céramiques de formule $Li_{1-x}(M,Ga,Al)_x(Ge_{1-y}Ti_y)_{2-x}(PO_4)_3$ où M représente un ou plusieurs métaux choisis parmi Nd, Sm, Eu, Gd, Tb, Dy, Ho, Er, Tm et Yb, et où $0<x\leq0,8$ et $0\leq y\leq1,0$. D'autres matériaux de ce type sont également connus dans la littérature, tel que le LATP de formule $Li_{1+x}Al_xTi_{2-x}(PO_4)_3$ et décrit dans l'article « The effects of crystallization parameters on ionic conductivity of a lithium aluminum germanium phosphate glass-ceramics » de J. S. Thokchom, et B. Kumar, , in J. Power Sources, vol. 195, p.2870, 2010, ou le LLZ de formule $Li_7La_3Zr_2O_{12}$ et décrit dans l'article « Fast Lithium Ion Conduction in Garnet-Type Li7La3Zr2O12 » de R. Murugan, V. Thangadurai, et W. Weppner, in Angew. Chem. Int. Ed., 46 (2007), p. 7778.

Des matériaux céramiques conducteurs de sodium sont par exemple des matériaux de formule $Na_{1-x}Zr_2Si_xP_{3-x}O_{12}$ où $0\leq x\leq3$. Ils sont décrits notamment dans le brevet US6485622 et dans l'article « Comparison of Different Synthesis Methods for Nasicon Ceramics » de N. Gasmi et al., J. of Sol-Gel Science and Technology 4(3) (1995) p. 231-237, et connus dans la littérature sous la dénomination Nasicon.

L'électrolyte solide **2** est de préférence sous forme d'une membrane. Son épaisseur dépend de ses deux autres dimensions. Plus la surface de la membrane est importante, plus l'épaisseur doit être élevée pour résister aux contraintes mécaniques. En outre, le rendement électrique d'une batterie est en partie gouverné par la résistance spécifique de l'électrolyte, et cette résistance spécifique R s'exprime par la formule :

$$R=(r\cdot e)/A,$$

où r désigne la résistivité de l'électrolyte, e l'épaisseur de la membrane et A l'aire de sa surface. Ainsi, on recherchera généralement à utiliser, dans la mesure du possible, des électrolytes solides de faible épaisseur. L'épaisseur de la membrane est avantageusement comprise entre 30 $\mu$m et 500 $\mu$m, de préférence entre 50 $\mu$m et 160 $\mu$m. Ces épaisseurs sont adéquates pour des surfaces comprises supérieures à 1 $mm^2$, de préférence comprises entre 1 $mm^2$ et 400 $cm^2$, toujours de préférence entre 4 $cm^2$ et 100 $cm^2$.

L'électrolyte céramique **2** peut être revêtu sur au moins une de ses surfaces à partir de laquelle va croître la matière active, notamment quand celle-ci est en lithium métal. Peuvent être cités comme exemples, des revêtements **5** à base de $Li_3N$, $Li_3P$, LiI, LiBr, LiF ou d'oxynitrure de lithium et de phosphore (LiPON) (voir par exemple X. Yu et alk., J. Electrochem. Soc. (1997) 144(2), page 524) pour la conduction de lithium, et par exemple du verre borosilicaté avec ajout de $Na_2O$ ou d'oxynitrure de sodium et de phosphore (NaPON) (voir par exemple S. Chun et al., Proc. 124th Meeting Electrochem. Soc. (2008) 195) pour la conduction de sodium.

La matière active **4** a avantageusement une épaisseur maximale comprise entre 50 $\mu$m et 5 mm, de préférence entre 100 $\mu$m et 500 $\mu$m, à la fin de la phase de charge.

Le compartiment anodique **1** peut comprendre un boitier **6** étanche et rigide dans lequel se trouvent l'électrolyte solide **2**, le collecteur **3** et la matière active **2**. La surface de l'électrolyte solide **2** opposée à celle tournée vers le collecteur **3** forme au moins en partie une surface extérieure du boitier **6**. Le boitier **6** peut avoir n'importe quelle forme appropriée permettant de l'intégrer dans une batterie, par exemple une forme cylindrique ou parallélépipédique. Ainsi, le boitier **6** et l'électrolyte solide **2** délimitent un espace intérieur étanche. Le boitier **6** peut être réalisé en résine synthétique, de préférence en une résine thermodurcie ou durcie à froid. La nature chimique de cette résine n'est pas déterminante à condition qu'elle n'interagisse pas de manière désavantageuse avec les composants contenus à l'intérieur du compartiment anodique **1**, et les éléments de la batterie dans laquelle sera utilisé le compartiment anodique **1**. Par exemple, les résines époxydes, polyesters insaturés, phénoliques et polyimides sont adéquates.

Dans ce cas, et de manière avantageuse, le collecteur **3** recouvre presque tout la face de l'électrolyte solide **2** mais pas entièrement, notamment afin d'éviter qu'il n'entre en contact avec les parois du boitier **6** étanche. En effet, si la matière active présente une épaisseur relativement grande à la fin de la phase de charge, et si le collecteur **3** est en contact avec les parois intérieures du boitier **6**, le collecteur **3** risque de se déformer et/ou de se rompre au fur et à mesure qu'il s'éloigne de l'électrolyte solide **2** lorsque la matière active **4** croît pendant la phase de charge. L'étendue du collecteur **3** sur l'électrolyte solide **2** est choisie de manière à ce que la distance entre les bords du collecteur **3** et les parois du boitier **6** soit de préférence au plus égale à quelques centaines de microns.

Toujours dans ce cas, le compartiment anodique **1** peut alors également comprendre un élément résilient agissant sur le collecteur **3** pour que celui-ci soit forcé en direction de l'électrolyte solide **2** permettant ainsi la compression continue de la matière active **4**. L'élément résilient peut être une ou plusieurs parois du boitier **6** lui-même ou un bloc **7** en matière résiliente comme une mousse. Dans le deuxième cas, le bloc en matière résilient occupe tout l'espace laissé libre dans la cassette quand la matière active est complètement consommée, c'est-à-dire à la fin de la phase de décharge.

Le bloc **7** en matière résiliente est par exemple en mousses de poly(chloroprène) (aussi dénommé Néoprène®, de préférence les mousses de néoprène commercialisées sous la dénomination Bulatex®, en particulier Bulatex C166, par la société Hutchinson. Un autre exemple serait le produit Sylomer® G, une mousse de poly(éther uréthane) commercialisée par la société Plastiform's.

Une batterie comprenant le compartiment anodique décrit ci-dessus sera décrite ci-après.

Cette batterie comprend, outre le compartiment anodique, une électrode positive, éventuellement un électrolyte liquide.

L'électrode positive peut être par exemple une électrode à air ou une électrode utilisant du souffre.

Lorsque l'électrode positive est une électrode à air, elle est de préférence en un matériau poreux conducteur d'électrons. Ce matériau poreux est par exemple un composé de noir de carbone, d'un catalyseur à base d'oxyde de manganèse ou de cobalt, d'un liant hydrophobe tel que le HFP (hexafluoropropylène) ou PTFE (polytétrafluoroéthylène), et d'un collecteur de courant tel un collecteur sous forme d'une grille de nickel. Un polymère conducteur d'anions peut être ajouté dans l'électrode tel que décrit dans le brevet WO 2010/128242 A1, notamment lorsque l'électrolyte est aqueux. Ce polymère a la fonction d'empêcher la carbonatation de l'électrolyte aqueux par le $CO_2$ contenu dans l'air. Le liant hydrophobe a la double fonction de produire une structure poreuse intègre mécaniquement à partir d'une poudre dont la percolation électronique est assurée par contact entre les grains de carbone, et d'être suffisamment hydrophobe pour empêcher l'électrolyte de traverser l'électrode lorsque celui-ci est liquide.

Cette batterie est par exemple une batterie lithium-air ou sodium-air ou encore lithium-souffre. Ou toute batterie utilisant une anode en lithium métal ou sodium métal

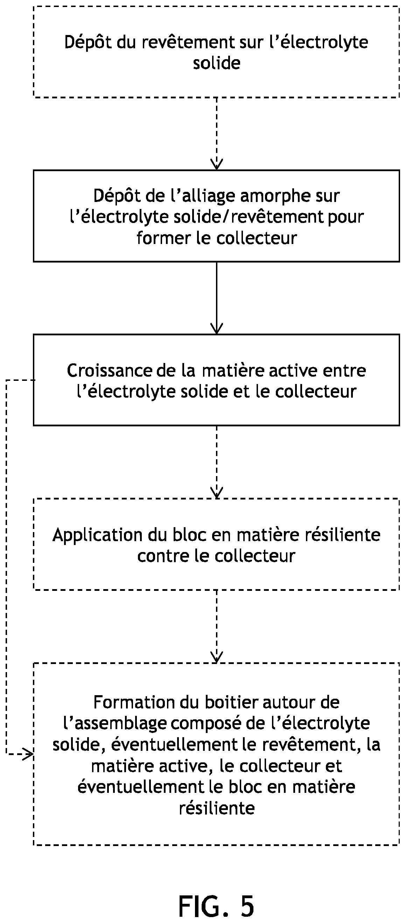

En référence à la figure 5 un procédé pour la fabrication d'un compartiment anodique tel que présenté ci-dessus est décrit ci-après.

Ce procédé comprend le dépôt d'un alliage amorphe sur l'électrolyte solide pour former le collecteur et la croissance d'une matière active en lithium métal ou en sodium métal entre l'électrolyte solide et le collecteur obtenant ainsi le compartiment anodique.

L'alliage amorphe peut être déposé sur l'électrolyte solide par pulvérisation cathodique ou par pulvérisation par faisceau d'ion.

Dans le cas d'une pulvérisation cathodique, le matériau de la cible utilisée peut être directement l'alliage que l'on souhaite déposé sur l'électrolyte solide, le matériau peut être cristallin ou déjà amorphe. En variante plusieurs cibles peuvent être utilisées et dont le nombre maximal est le nombre d'éléments métalliques composant l'alliage amorphe que l'on souhaite déposé sur l'électrolyte solide. Dans le cas où le nombre de cibles est inférieur au nombre d'éléments métalliques composant l'alliage amorphe, au moins une des cibles est en un alliage. La définition d'élément métallique est comprise comme incluant tous les éléments chimiques de transition ainsi que l'acier. Par exemple, le matériau de la cible est un alliage en CuZr amorphe ou cristallin. Autre exemple, deux cibles sont être utilisées, l'une en Cu et l'autre en Zr.

L'alliage amorphe est déposé sur l'électrolyte solide jusqu'à atteindre une épaisseur inférieure à 2 μm, de préférence comprise entre 200 et 400 nm.

La croissance de la matière active entre l'électrolyte solide et le collecteur peut être réalisée de la manière suivante. La face de l'électrolyte solide non tournée vers le collecteur est mise en contact, au moins en partie, avec un électrolyte liquide contenant les cations du métal alcalin qui formera la matière active. Un potentiel réducteur est ensuite appliqué entre le collecteur et une électrode positive plongée dans l'électrolyte liquide contenant les cations du métal alcalin. Le potentiel réducteur est maintenu entre le collecteur et l'électrode positive pendant une durée suffisante pour que la matière active croisse entre l'électrolyte solide et le collecteur jusqu'à une épaisseur souhaitée.

L'électrolyte liquide peut être par exemple du LiOH pour une matière active en lithium métal, ou NaOH pour une matière active en sodium métal. La concentration en LiOH ou NaOH est de préférence au moins égale à 1 mol/L et peut aller jusqu'à saturation voire au-delà.

L'électrode positive utilisée pour la croissance de lithium métal ou de sodium métal peut être une électrode en métal ou alliage stable dans l'électrolyte liquide utilisé et aux potentiels d'oxydation des ions de l'électrolyte liquide.

Le potentiel réducteur appliqué est maintenu de préférence à une valeur comprise entre -3,1 V et -3,6 V par rapport à une électrode de référence Hg/HgO/KOH 1M dans l'électrolyte liquide. Ce potentiel doit en effet être suffisamment élevé en valeur absolue pour que l'ion alcalin soit réduit en métal alcalin. De préférence, l'intensité du courant est comprise entre 0.1 mAh/cm$^2$ et 100 mAh/cm$^2$.

Dans le cas où un revêtement est prévu sur l'électrolyte solide, celui-ci est déposé sur l'électrolyte solide avant le dépôt de l'alliage amorphe par pulvérisation cathodique par exemple.

Dans le cas où le compartiment anodique se présente sous la forme d'un boitier, le boitier est coulé autour de l'assemblage constitué par l'électrolyte solide, éventuellement le revêtement, la matière active, le collecteur et éventuellement le bloc en matière résiliente.

## Revendications

1. Compartiment anodique pour batteries lithium ou sodium rechargeables comprenant :

    - un électrolyte solide ;
    - un collecteur déposé sur l'électrolyte solide ; et
    - une matière active en lithium métal ou en sodium métal que l'on a fait croître entre l'électrolyte solide et le collecteur afin de former avec le collecteur une électrode en lithium métal ou en sodium métal,

dans lequel le collecteur est un alliage amorphe,

**caractérisé en ce que** l'alliage amorphe a un coefficient d'allongement relatif maximal supérieur à 1,8%.

2. Compartiment anodique selon la revendication 1, dans lequel l'alliage amorphe contient au total moins de 10 % en nombre d'atomes de Si, Sn et Ag.

3. Compartiment anodique selon la revendication 1 ou 2, dans lequel l'alliage amorphe est $Cu_xZr_{1-x}$, avec x compris entre 0,25 et 0,75.

4. Compartiment anodique selon l'une des revendications 1 à 3, dans lequel le collecteur se présente sous la forme d'une fine couche d'épaisseur inférieure à 1 $\mu$m.

5. Compartiment anodique selon l'une des revendications 1 à 4, dans lequel l'électrolyte solide est en un matériau céramique.

6. Procédé pour la fabrication d'un compartiment anodique pour batteries lithium rechargeables comprenant :

   - un électrolyte solide ;
   - un collecteur en alliage amorphe ; et
   - une matière active en lithium métal ou en sodium métal entre l'électrolyte solide et le collecteur ;

   le procédé comprenant les étapes de :

   - dépôt d'un alliage amorphe sur l'électrolyte solide pour former le collecteur ;
   - croissance d'une matière active en lithium métal ou en sodium métal entre l'électrolyte solide et le collecteur obtenant ainsi le compartiment anodique, **caractérisé en ce que** l'alliage amorphe a un coefficient d'allongement relatif maximal supérieur à 1,8 %.

7. Procédé selon la revendication 6, dans lequel l'alliage amorphe est déposé sur l'électrolyte solide par pulvérisation cathodique ou pulvérisation à faisceau d'ion.

8. Procédé selon la revendication 6 ou la revendication 7, dans lequel l'alliage amorphe est $Cu_xZr_{1-x}$, avec x compris entre 0,25 et 0,75.

9. Procédé selon l'une des revendications 6 à 8, dans lequel la matière active est crûe entre l'électrolyte solide et le collecteur par dépôt électrochimique.

10. Procédé selon l'une des revendications 6 à 9, dans lequel l'électrolyte solide est en un matériau céramique.

11. Batterie comprenant une cathode, un électrolyte liquide et un compartiment anodique selon l'une des revendications 1 à 5.

**Patentansprüche**

1. Anodenkompartiment für wiederaufladbare Lithium- oder Natriumbatterien, umfassend:

   - einen Festelektrolyt;
   - einen auf dem Festelektrolyt abgeschiedenen Kollektor; und
   - eine Aktivmasse aus Lithiummetall oder Natriummetall, das zwischen dem Festelektrolyt und dem Kollektor wachsen gelassen wurde, um mit dem Kollektor eine Elektrode aus Lithiummetall oder Natriummetall zu bilden,

   wobei es sich bei dem Kollektor um eine amorphe Legierung handelt,
   **dadurch gekennzeichnet, dass** die amorphe Legierung einen maximalen relativen Dehnungskoeffizienten von mehr als 1,8 % aufweist.

2. Anodenkompartiment nach Anspruch 1, wobei die amorphe Legierung insgesamt weniger als 10 Zahlen-% Si, Sn und Ag enthält.

3. Anodenkompartiment nach Anspruch 1 oder 2, wobei es sich bei der amorphen Legierung um $Cu_xZr_{1-x}$ handelt, wobei x zwischen 0,25 und 0,75 liegt.

4. Anodenkompartiment nach einem der Ansprüche 1 bis 3, wobei der Kollektor in Form einer dünnen Schicht mit einer Dicke von weniger als 1 $\mu$m vorliegt.

5. Anodenkompartiment nach einem der Ansprüche 1 bis 4, wobei der Festelektrolyt aus einem Keramikmaterial besteht.

6. Verfahren zur Herstellung eines Anodenkompartiments für wiederaufladbare Lithiumbatterien, umfassend:

   - einen Festelektrolyt;
   - einen Kollektor aus einer amorphen Legierung; und
   - eine Aktivmasse aus Lithiummetall oder Natriummetall zwischen dem Festelektrolyt und dem Kollektor;

   wobei das Verfahren folgende Schritte umfasst:

   - Abscheiden einer amorphen Legierung auf dem Festelektrolyt zur Bildung des Kollektors;
   - Wachsenlassen eine Aktivmasse aus Lithiummetall oder Natriummetall zwischen dem Festelektrolyt und dem Kollektor, was das Anodenkompartiment ergibt,

**dadurch gekennzeichnet, dass** die amorphe Legierung einen maximalen relativen Dehnungskoeffizienten von mehr als 1,8 % aufweist.

7. Verfahren nach Anspruch 6, bei dem die amorphe Legierung durch Kathodenzerstäubung oder Ionenstrahlzerstäubung abgeschieden wird.

8. Verfahren nach Anspruch 6 oder Anspruch 7, bei dem es sich bei der amorphen Legierung um $Cu_xZr_{1-x}$ handelt, wobei x zwischen 0,25 und 0,75 liegt.

9. Verfahren nach einem der Ansprüche 6 bis 8, bei dem die Aktivmasse zwischen dem Festelektrolyt und dem Kollektor durch elektrochemische Abscheidung wachsen gelassen wird.

10. Verfahren nach einem der Ansprüche 6 bis 9, bei dem der Festelektrolyt aus einem Keramikmaterial besteht.

11. Batterie mit einer Kathode, einem Flüssigelektrolyt und einem Anodenkompartiment nach einem der Ansprüche 1 bis 5.

**Claims**

1. Anode compartment for rechargeable lithium or sodium batteries comprising:

- a solid electrolyte;
- a collector deposited on the solid electrolyte; and
- an active material made of lithium metal or sodium metal that is grown between the solid electrolyte and the collector in order to form with the collector an electrode made of lithium metal or sodium metal,

in which the collector is made of an amorphous alloy, **characterized in that** the amorphous alloy has a maximum relative coefficient of elongation greater than 1.8% .

2. Anode compartment according to claim 1, in which the amorphous alloy contains in total less than 10% by number of Si, Sn and Ag atoms.

3. Anode compartment according to claim 1 or 2, in which the amorphous alloy is $Cu_xZr_{1-x}$, with x comprised between 0.25 and 0.75.

4. Anode compartment according to one of claims 1 to 3, in which the collector is in the form of a fine layer with a thickness of less than 1 $\mu$m.

5. Anode compartment according to one of claims 1 to 4, in which the solid electrolyte is made of a ceramic material.

6. Process for the manufacture of an anode compartment for rechargeable lithium batteries comprising:

- a solid electrolyte;
- a collector made of amorphous-alloy; and
- an active material made of lithium metal or sodium metal between the solid electrolyte and the collector;

the process comprising the steps of:

- deposition of an amorphous alloy on the solid electrolyte in order to form the collector;
- growth of an active material made of lithium metal or sodium metal between the solid electrolyte and the collector thus obtaining the anode compartment,

**characterized in that** the amorphous alloy has a maximum relative coefficient of elongation greater than 1.8%.

7. Process according to claim 6, in which the amorphous alloy is deposited on the solid electrolyte by cathodic sputtering or ion beam sputtering.

8. Process according to claim 6 or claim 7, in which the amorphous alloy is $Cu_xZr_{1-x}$, with x comprised between 0.25 and 0.75.

9. Process according to one of claims 6 to 8, in which the active material is grown between the solid electrolyte and the collector by electrochemical deposition.

10. Process according to one of claims 6 to 9, in which the solid electrolyte is made of a ceramic material.

11. Battery comprising a cathode, a liquid electrolyte and an anode compartment according to one of claims 1 to 5.

FIG. 1

FIG. 2

FIG. 3

FIG. 4

```
┌ ─ ─ ─ ─ ─ ─ ─ ─ ─ ─ ─ ─ ─ ─ ─ ─ ┐
│  Dépôt du revêtement sur l'électrolyte  │
│                solide                   │
└ ─ ─ ─ ─ ─ ─ ─ ─ ─ ─ ─ ─ ─ ─ ─ ─ ┘
                   ⋮
                   ↓
┌──────────────────────────────────┐
│     Dépôt de l'alliage amorphe sur     │
│   l'électrolyte solide/revêtement pour  │
│           former le collecteur          │
└──────────────────────────────────┘
                   │
                   ↓
┌──────────────────────────────────┐
│   Croissance de la matière active entre  │
│     l'électrolyte solide et le collecteur │
└──────────────────────────────────┘
                   ⋮
                   ↓
┌ ─ ─ ─ ─ ─ ─ ─ ─ ─ ─ ─ ─ ─ ─ ─ ─ ┐
│   Application du bloc en matière résiliente │
│             contre le collecteur            │
└ ─ ─ ─ ─ ─ ─ ─ ─ ─ ─ ─ ─ ─ ─ ─ ─ ┘
                   ⋮
                   ↓
┌ ─ ─ ─ ─ ─ ─ ─ ─ ─ ─ ─ ─ ─ ─ ─ ─ ┐
│      Formation du boitier autour de      │
│   l'assemblage composé de l'électrolyte   │
│  solide, éventuellement le revêtement, la │
│    matière active, le collecteur et       │
│  éventuellement le bloc en matière        │
│              résiliente                   │
└ ─ ─ ─ ─ ─ ─ ─ ─ ─ ─ ─ ─ ─ ─ ─ ─ ┘
```

# FIG. 5

Fissure

Li métal peu dense

## FIG. 6

Li métal dense

## FIG. 7

## RÉFÉRENCES CITÉES DANS LA DESCRIPTION

**Documents brevets cités dans la description**

- US 5053297 A
- JP 2001250559 A
- JP 2005209434 A
- US 6485622 B
- WO 2010128242 A1

**Littérature non-brevet citée dans la description**

- *Journal of the Electrochemical Society,* 2013, vol. 160 (3), A464-A470
- **E J. S. THOKCHOM ; B. KUMAR.** The effects of crystallization parameters on ionic conductivity of a lithium aluminum germanium phosphate glass-ceramics. *J. Power Sources,* 2010, vol. 195, 2870
- **R. MURUGAN ; V. THANGADURAI ; W. WEPPNE.** Fast Lithium Ion Conduction in Garnet-Type Li7La3Zr2O. *Angew. Chem. Int. Ed.,* 2007, vol. 46, 7778
- **N. GASMI et al.** Comparison of Different Synthesis Methods for Nasicon Ceramics. *J. of Sol-Gel Science and Technology,* 1995, vol. 4 (3), 231-237
- **X. YU.** *J. Electrochem. Soc.,* 1997, vol. 144 (2), 524
- **S. CHUN et al.** *Proc. 124th Meeting Electrochem. Soc.,* 2008, 195